**Europäisches Patentamt**

**European Patent Office**

**Office européen des brevets**

(19)

(11) Veröffentlichungsnummer : **0 154 375**
**B1**

(12) ## EUROPÄISCHE PATENTSCHRIFT

(45) Veröffentlichungstag der Patentschrift :
09.09.87

(21) Anmeldenummer : 85200241.9

(22) Anmeldetag : 22.02.85

(51) Int. Cl.⁴ : **C 03 B 37/16, B 26 B 27/00,**
**H 02 G 1/12, G 02 B 6/16**

(54) Vorrichtung zum Ablösen der auf die Glasfaser von Lichtwellenleitern aufgebrachten Beschichtung.

(30) Priorität : 25.02.84 DE 3406917

(43) Veröffentlichungstag der Anmeldung :
11.09.85 Patentblatt 85/37

(45) Bekanntmachung des Hinweises auf die Patenterteilung : 09.09.87 Patentblatt 87/37

(84) Benannte Vertragsstaaten :
DE FR GB NL

(56) Entgegenhaltungen :
DE-A- 2 629 208
DE-A- 2 806 878
US-A- 4 188 841
US-A- 4 345 362

(73) Patentinhaber : Philips Patentverwaltung GmbH
Billstrasse 80
D-2000 Hamburg 28 (DE)
DE
N.V. Philips' Gloeilampenfabrieken
Groenewoudseweg 1
NL-5621 BA Eindhoven (NL)
FR GB NL

(72) Erfinder : Schmidt, Bernhard
Rehfeld 8
D-5206 Neunkirchen-Seelscheid (DE)

(74) Vertreter : Meier, Friedrich, Dipl.-Ing. et al
c/o PHILIPS PATENTVERWALTUNG GMBH Billstrasse
80 Postfach 10 51 49
D-2000 Hamburg 28 (DE)

**Beschreibung**

Die Erfindung betrifft eine Vorrichtung zum Ablösen der auf die Glasfaser von Lichtwellenleitern aufgebrachten Beschichtung nach dem Oberbegriff des Patentanspruchs 1. Eine Vorrichtung dieser Art ist z. B. aus der US-A-4 345 362 bekannt.

Die als Lichtwellenleiter eingesetzten Glasfasern haben eine Beschichtung, das sog. Primär-Coating, die die Glasfaser schützt und stützt. Dieses Primär-Coating ist von einem sog. Sekundär-Coating umschlossen, das meist als Kunststoffschlauch ausgebildet ist und das Primär-Coating nicht haftend umschließt. Soll die Glasfaser zur Herstellung einer Verbindung oder dergl. freigelegt werden, dann ist zunächst das Sekundär-Coating abzuziehen. Hierfür kann man meist Zangen mit angeschliffenen Schneiden verwenden, wie sie auch zum Abisolieren von Kupferleitungen Verwendung finden.

Ist das Primär-Coating als Zweischicht-Coating aufgebaut, d. h. mit einer weichen und mit einer darüber gelegten harten Kunststoffschicht, dann läßt sich das Sekundär-Coating, wenn überhaupt, nur stückweise mit Hilfe einer Abisolierzange abnehmen, weil wegen der Weichheit der Schicht eine Art Stopfbuchseneffekt auftritt. In jedem Falle ist das Primär-Coating noch mit Hilfe von Chemikalien zu entfernen.

Der Erfindung liegt die Aufgabe zugrunde, eine Vorrichtung zum Ablösen der auf die Glasfaser von Lichtwellenleitern aufgebrachten Beschichtung unter Verwendung beweglicher Schneiden anzugeben, die die Glasfaser beim Schließen der Schneiden unter zumindest teilweiser Durchtrennung der Beschichtung umschließen. Die Faser soll dabei in einer Klemmvorrichtung so festgehalten werden, daß die eingeschnittene Beschichtung problemlos abgezogen werden kann, und zwar ohne wesentliche Verluste in bezug auf die Festigkeit der Glasfaser. Zur Lösung dieser Aufgabe wird gemäß der Erfindung vorgeschlagen, bei einer Vorrichtung der beschriebenen Art die Schneiden mit einer Leiterführung zu verbinden, die sich derart gegen den Außendurchmesser der beschichteten Faser legt, daß der Lichtwellenleiter zentriert und die Eindringtiefe der Schneide auf eine vorgegebene Tiefe begrenzt wird. Damit kann sehr viel genauer als mit einer bekannten Zange die Schneidtiefe justiert werden, so daß bei weitgehender Durchtrennung der Beschichtung eine Beschädigung der Glasfaser ausgeschlossen ist.

Die Leiterführungen sind vorzugsweise halbschalenförmig ausgebildet und umgreifen den Lichtwellenleiter im angelegten Zustand hülsenförmig.

Besonders vorteilhaft ist es, den Schneiden benachbart eine die abzulösende Beschichtung umschließende Heizung anzuordnen. Durch diese Beheizung wird der bei der Beschichtung erzielte Schrumpfeffekt aufgehoben, so daß sich nicht nur das Sekundär-Coating, sondern auch das Primär-Coating leicht von der Faser abziehen läßt. Zur Erzielung einer sauberen Abtrennung ist es vorteilhaft, die Schneiden keilförmig anzuschleifen und so zu montieren, daß die Schneidenrücken auf der Seite der abzulösenden Schichtteile eine senkrecht zur Faser stehende Fläche bilden.

Im Gegensatz zu einem bekannten Entfernen der Schicht unter Hitzeeinwirkung, bei der die Schicht verbrannt wird, ist beim Verfahren nach der Erfindung die Verweildauer im Bereich der Heizung sehr kurz, und es bleiben keine Rückstände auf der Faser. Die Heizung wird zweckmäßig mit geringem Abstand zur Schneide angeordnet, so daß im Bereich des eigentlichen Einschnittes keine wesentliche Erwärmung auftritt, damit insbesondere das Primär-Coating unter Einfluß der Wärme beim Ablösen der Beschichtung nicht ausgezogen wird.

Anhand einer schematischen Darstellung sei eine Vorrichtung nach der Erfindung beschrieben und die Wirkungsweise erläutert.

Der Lichtwellenteiter, bestehend aus der Glasfaser 1, dem Primär-Coating 2 und dem Sekundär-Coating 3, ist mit Hilfe von Klemmbacken 4 festgehalten. Relativ zu den Klemmbacken 4 lassen sich über die Führung 5 mit den radialen Haltern 6 die Schneidmesser 7 mit den keilförmigen Schneiden 8 axial zur Glasfaser 1 bewegen. Mit den Schneidmessern 7 sind eine Zentrierhülse bildende Leiterführungen 9 verbunden, durch die beim Bewegen der Schneiden der Lichtwellenleiter zentriert und erst in der zentrierten Lage durch die Schneiden eingeschnitten wird. Die Einschnittiefe der Schneiden 8 ist dabei durch die halbschaligen Leiterführungen 9 begrenzt. Mit den Haltern 6 ist eine Heizung 10 verbunden, die den Lichtwellenleiter umschließt und die Schichten 2 und 3 erwärmt. Der Abstand der Heizung 10 zu den Schneidmessern 7 kann über Verstellelemente 11 so eingestellt werden, daß sich die Beschichtung von der Glasfaser gut löst, ein Ausziehen einer oder mehrerer Schichten nach dem Erwärmungsvorgang beim Ablösen aber vermieden ist.

Die Schneidmesser 7 sind im Bereich der Schneiden 8 vorzugsweise kreisförmig ausgeschliffen, so daß ein möglichst großer Teil der Beschichtung 2, 3 ohne Beschädigung der Faser 1 von den Messern durchtrennt wird. Für den praktischen Einsatz kann die Vorrichtung nach der Erfindung als eine Art Zange ausgebildet werden, in die der Lichtwellenleiter eingeschoben wird. Mit dem Schließen der Zange halten die Klemmbacken 4 den Lichtwellenleiter fest, dann werden die Schneidmesser 7 geschlossen und damit die Beschichtung 2, 3 eingeschnitten und schließlich werden die Klemmbacken 4 gegenüber der gesamten Halte- und Schneidvorrichtung innerhalb der Führung 5 in Pfeilrichtung bewegt, wodurch die Beschichtung 2, 3 von der Faser in einem Zug von den Schneiden 8 bis zum Faserende abgelöst werden kann. In vielen Fällen ist es zweckmäßig, die Beschichtung 2, 3 nur ein Stück abzuschieben, weil dann die abgeschobene Beschichtung zum Einspannen des Lichtwellenleiters für den Schneidvorgang der Faser 1 benutzt werden kann.

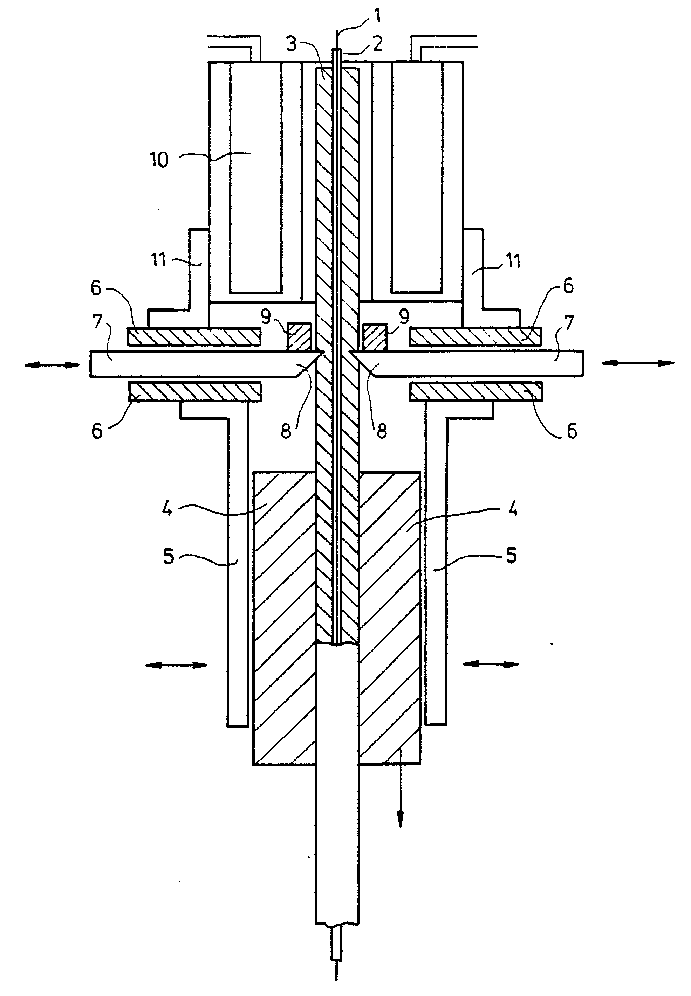

**Patentansprüche**

1. Vorrichtung zum Ablösen der auf die Glasfaser (1) von Lichtwellenleitern aufgebrachten Beschichtung (2, 3) unter Verwendung von beweglichen Schneiden (8), die die Glasfaser (1) beim Schließen der Schneiden (8) unter zumindest teilweiser Durchtrennung der Beschichtung (2, 3) umschließen und eine die beschichtete Faser haltende Klemmvorrichtung (4), die relativ zu den Schneiden (8) bewegbar ist, dadurch gekennzeichnet, daß mit den Schneiden (8) eine Leiterführung (9) verbunden ist, die sich derart gegen den Außendurchmesser der beschichteten Faser legt, daß der Lichtwellenleiter zentriert und die Eindringtiefe der Schneide auf eine vorgegebene Tiefe begrenzt wird.

2. Vorrichtung nach Anspruch 1, dadurch gekennzeichnet, daß die Leiterführungen (9) halbschalenförmig ausgebildet sind und den Lichtwellenleiter im angelegten Zustand hülsenförmig umgreifen.

3. Vorrichtung nach Anspruch 1 oder 2, dadurch gekennzeichnet, daß den Schneiden (8) benachbart, eine die abzulösende Beschichtung umschließende Heizung (10) angeordnet ist.

4. Vorrichtung nach einem der Ansprüche 1 bis 3, dadurch gekennzeichnet, daß die Schneiden (8) keilförmig angeschliffen und so montiert sind, daß der Schneidenrücken auf der Seite der abzulösenden Schicht eine senkrecht zur Faser stehende Fläche bildet.

**Claims**

1. A device for removing the coating (2, 3) applied to the glass fibre (1) of light wave guides with the use of movable cutting edges (8), which, when closed, enclose the glass fibre (1) whilst severing at least in part the coating (2, 3), and a clamping member (4) which holds the coated fibre and is movable relative to the cutting edges (8), characterized in that the cutting edges (8) have connected to them guiding means (9), which engage the outer diameter of the coated fibre in such a manner that the light wave guide is centred and the penetration depth of the cutting edge is limited to a given depth.

2. A device as claimed in Claim 1, characterized in that the guiding means (9) are in the form of semicylindrical shells and surround the light wave guide like a sleeve in the guiding condition.

3. A device as claimed in Claim 1 or 2, characterized in that adjacent to the cutting edges (8) heating means (10) are arranged which enclose the coating to be removed.

4. A device as claimed in any one of Claims 1 to 3, characterized in that the cutting edges (8) are ground into a wedge-like shape and are mounted so that the back of the cutting edges on the side of the coating to be removed forms a surface which is at right angles to the fibre.

**Revendications**

1. Dispositif pour découvrir la fibre de verre (1) de guides d'ondes lumineuses de son revêtement (2, 3) au moyen de tranchants mobiles (8) qui, rapprochés l'un de l'autre, enferment la fibre de verre (1) tout en coupant au moins partiellement le revêtement (2), et d'un dispositif de serrage (4) servant à maintenir la fibre revêtue et pouvant être déplacé par rapport aux tranchants (8), caractérisé en ce qu'aux tranchants (8) sont réunis des moyens de centrage (9) qui sont appliqués contre le diamètre extérieur de la fibre revêtue de façon à centrer le guide d'ondes lumineuses et à limiter la profondeur de pénétration du tranchant à une valeur prédéterminée.

2. Dispositif selon la revendication 1, caractérisé en ce que les moyens de centrage (9) sont réalisés sous la forme d'une demi-coquille et en ce que, dans leur position de fonctionnement, ils enserrent le guide d'ondes lumineuses en manchon.

3. Dispositif selon la revendication 1 ou 2, caractérisé en ce qu'à proximité des tranchants (8), est disposé un dispositif de chauffage (10) enfermant le revêtement à enlever.

4. Dispositif selon l'une des revendications 1 à 3, caractérisé en ce que les tranchants (8) sont affûtés en coin et en ce qu'ils sont montés de façon que les dos de tranchants forment du côté de la couche à enlever une surface perpendiculaire à la fibre.